# EUROPÄISCHE PATENTSCHRIFT

(11) **EP 2 960 444 B1**
(45) Veröffentlichungstag und Bekanntmachung des Hinweises auf die Patenterteilung: **02.12.2020**
(21) Anmeldenummer: 15166676.5
(22) Anmeldetag: 07.05.2015
(51) Int. Cl.: F01D 21/00, G01B 11/14, F01D 11/14, G01D 11/24, G01B 17/00

(54) **ABSTANDSMESSVERFAHREN UND ABSTANDSMESSEINRICHTUNG**
DISTANCE MEASURING METHOD AND DISTANCE MEASURING DEVICE
PROCÉDÉ ET DISPOSITIF DE MESURE DE DISTANCE

(30) Priorität: 27.06.2014 DE 102014212412
(43) Veröffentlichungstag der Anmeldung: 30.12.2015
(73) Patentinhaber: Siemens Aktiengesellschaft, 80333 München (DE)
(72) Erfinder: Müller, Andreas, 10437 Berlin (DE); Polesky, Peter, 16727 Velten (DE); Tritsch, Katrin, 13629 Berlin (DE); Woitscheck, Rolf-Dieter, 14089 Berlin (DE)

(56) Entgegenhaltungen:
- EP-A2- 2 278 268
- DE-A1-102010 053 726
- GB-A- 2 427 683
- JP-A- 2003 042 745
- US-A- 4 907 456
- US-A1- 2003 222 640
- US-A1- 2009 071 256

## Beschreibung

Die vorliegende Erfindung betrifft eine Abstandsmesseinrichtung mit einem rohrförmigen Gehäuse und einem in dem Gehäuse aufgenommenen, berührungslos messenden Abstandssensor, der ein konfokal-chromatischer oder akustischer Abstandssensor ist. Ferner betrifft die Erfindung ein Verfahren zur Messung eines Abstands zwischen Schaufelspitzen von an einem Rotor gehaltenen Laufschaufeln und einer die Laufschaufelspitzen ringförmig umgebenden Ummantelung bei sich drehendem Rotor unter Verwendung einer solchen Abstandsmesseinrichtung.

Zur Gewährleistung eines ordnungsgemäßen Betriebs einer Turbine ist es wichtig, einen vorbestimmten Abstand bzw. ein vorbestimmtes Spaltmaß zwischen den Schaufelspitzen der Laufschaufeln und einer die Schaufelspitzen umgebenden Ummantelung einzustellen, die beispielsweise durch Leitschaufelträger gebildet wird. Eine solche Einstellung erfolgt an bereits montierter Turbine vor der ersten Inbetriebnahme sowie vor und nach der Durchführung von Wartungsarbeiten. In einem ersten Schritt wird der Ist-Abstand zwischen den Schaufelspitzen und den Laufschaufelträgern bei sich drehendem Rotor erfasst. Hierzu kommt beispielsweise ein Messverfahren zum Einsatz, bei dem ein Metallstift durch eine in der Ummantelung vorgesehene radiale Durchgangsöffnung eingeführt wird, bis der Monteur ein Anschlagen der Laufschaufelspitzen an den Metallstift wahrnimmt. Über die Einstecktiefe des Metallstifts kann dann auf den vorhandenen Ist-Abstand zwischen den Schaufelspitzen und der Ummantelung geschlossen werden. Basierend auf dem erfassten Ist-Abstand erfolgt in einem weiteren Schritt eine Justierung der relativen Lage besagter Bauteile. Ein Problem einer solchen Abstandsmessung besteht allerdings dahingehend, dass diese mit Beschädigungen der Turbine einhergehen kann. Wird der Metallstift zu tief in die Durchgangsöffnung der Ummantelung eingeschoben, so kann dieser von den sich drehenden Laufschaufeln abgeschert werden und in die Maschine fallen. Dies hat zur Folge, dass die bereits fertig montierte Turbine wieder zu großen Teilen demontiert werden muss, um die verlorengegangenen Teile aus der Turbine zu entfernen, was mit sehr hohen Kosten einhergeht.

Weitere Abstandsmesseinrichtungen mit berührungslos messenden Abstandssensoren, bei denen die zuvor beschriebene Problematik während der Durchführung einer Abstandsmessung nicht auftritt, sind in den Druckschriften US 2003/222 650 A1, JP 2003 042745 A, GB 2 427 683 A, DE 10 2010 053 726 A1, EP 2 278 268 A2, US 2009/071256 A1 und US 4 907 456 A offenbart. Bei einigen dieser Abstandsmesseinrichtungen besteht allerdings die Gefahr, dass die Abstandssensoren während eines Transports oder während der Anordnung an einer Vorrichtung vor der Durchführung einer Abstandsmessung beschädigt werden.

Ausgehend von diesem Stand der Technik ist es eine Aufgabe der vorliegenden Erfindung, eine Abstandsmesseinrichtung der eingangs genannten Art zu schaffen, mit der sich ein Verfahren zur Messung eines Abstands zwischen Schaufelspitzen von an einem Rotor gehaltenen Laufschaufeln und einer die Schaufelspitzen ringförmig umgebenden Ummantelung bei sich drehendem Rotor einfach und preiswert ohne die Gefahr von Beschädigungen durchführen lässt.

Zur Lösung dieser Aufgabe schafft die vorliegende Erfindung eine Abstandsmesseinrichtung nach Anspruch 1. Dank der beweglichen Anordnung des Abstandssensors zwischen der Betriebsstellung und der zurückgezogenen Stellung kann der Abstandssensor bei Bedarf jederzeit in die zurückgezogene Stellung überführt werden, um diesen während eines Transports oder während des Einsetzens in eine zugeordnete Durchgangsbohrung vor äußeren Beschädigungen zu schützen.

Gemäß einer Ausgestaltung der vorliegenden Erfindung ist zumindest eine Feder vorgesehen, die derart angeordnet ist, dass ihre Federkraft einer Bewegung des Abstandssensors aus der zurückgezogenen Stellung in die Betriebsstellung entgegen wirkt. Mit anderen Worten wird der Abstandssensor durch die Feder in die zurückgezogene Stellung gedrückt, wodurch eine ordnungsgemäße Positionierung des Abstandssensors in den einzelnen Stellungen gewährleistet ist.

Gemäß einer Variante der vorliegenden Erfindung ist der Abstandssensor an einem in dem Gehäuse gleitend bewegbar aufgenommenen Zylinder angeordnet.

Bevorzugt ist der Abstandssensor stabförmig ausgebildet und in einer am freien Ende des Zylinders vorgesehenen axialen Sackbohrung aufgenommen. Hierdurch wird ein einfacher Aufbau erzielt.

Zur Lösung der eingangs genannten Aufgabe schafft die vorliegende Erfindung ferner ein Verfahren nach Anspruch 5.

Gemäß einer Ausgestaltung des erfindungsgemäßen Verfahrens wird die Abstandsmesseinrichtung zur Durchführung der Abstandsmessung in eine sich radial durch die Ummantelung erstreckende, von außen zugängliche Durchgangsbohrung eingesetzt. Entsprechend kann die Abstandsmesseinrichtung in einfacher Weise montiert und demontiert werden.

Bevorzugt wird die Abstandsmessung an mehreren Umfangspositionen durchgeführt, die insbesondere gleichmäßig voneinander beabstandet sind. Auf diese Weise wird eine ordnungsgemäße Erfassung der relativen Ist-Lage des Rotors und der Ummantelung sichergestellt, was wiederum eine ordnungsgemäße Ausrichtung der relativen Lage ermöglicht.

Die Abstandsmesseinrichtung und die Durchgangsbohrung(en) sind vorteilhaft derart ausgebildet, dass sichergestellt ist, dass die Ummantelung im bestimmungsgemäßen Zustand gegenüber der in einer Durchgangsbohrung aufgenommenen Abstandsmesseinrichtung radial einwärts vorsteht. So können beispielsweise die Durchgangsbohrung(en) sowie die Außenkontur der Messeinrichtung mit entsprechenden Absätzen versehen sein, die verhindern, dass die Abstandsmesseinrichtung radial einwärts gegenüber der Ummantelung vorspringt. Auf diese Weise kann ein Kontakt der Abstandsmesseinrichtung mit den Laufschaufelspitzen der sich drehenden Laufschaufeln während der Durchführung der Messung sicher ausgeschlossen werden.

Weitere Merkmale und Vorteile der vorliegenden Erfindung werden anhand der nachfolgenden Beschreibung einer Abstandsmesseinrichtung gemäß einer Ausführungsform der vorliegenden Erfindung unter Bezugnahme auf die beiliegende Zeichnung deutlich. Darin ist
Figur 1 eine perspektivische Ansicht einer Abstandsmesseinrichtung gemäß einer Ausführungsform der vorliegenden Erfindung;
Figur 2 eine vergrößerte Schnittansicht der in Figur 1 dargestellten Abstandsmesseinrichtung;
Figur 3 eine Schnittansicht eines Gehäuses der in den Figuren 1 und 2 dargestellten Abstandsmesseinrichtung;
Figur 4 eine Draufsicht des in Figur 3 gezeigten Gehäuses;
Figur 5 eine Schnittansicht einer Buchse der in den Figuren 1 und 2 dargestellten Abstandsmesseinrichtung;
Figur 6 eine Schnittansicht eines Zylinders der in den Figuren 1 und 2 dargestellten Abstandsmesseinrichtung;
Figur 7 eine perspektivische Ansicht des in Figur 6 gezeigten Zylinders;
Figur 8 eine perspektivische Ansicht einer Gleitbuchse der in den Figuren 1 und 2 dargestellten Abstandsmesseinrichtung;
Figur 9 eine perspektivische Ansicht eines Deckels der in den Figuren 1 und 2 dargestellten Abstandsmesseinrichtung;
Figur 10 eine teilweise geschnittene Ansicht des in Figur 9 gezeigten Deckels;
Figur 11 eine Schnittansicht einer Kalibriereinrichtung der in den Figuren 1 und 2 dargestellten Abstandsmesseinrichtung;
Figur 12 eine perspektivische Ansicht der in Figur 11 gezeigten Abstandsmesseinrichtung und
Figur 13 eine Ansicht, welche die in den Figuren 1 und 2 dargestellte Abstandsmesseinrichtung im bestimmungsgemäß angeordneten Zustand zeigt.

Die Figuren zeigen eine berührungslos messende Abstandsmesseinrichtung 1 gemäß einer Ausführungsform der vorliegenden Erfindung beziehungsweise Komponenten derselben. Die Abstandsmesseinrichtung 1 umfasst als Hauptkomponenten ein rohrförmiges Gehäuse 2, eine ein erstes freies Ende des Gehäuses 2 verschließende Buchse 3, einen das ein zweites freies Ende des Gehäuses 2 verschließenden Deckel 4, einen in dem Gehäuse 2 aufgenommenen und axial bewegbaren Zylinder 5, der sich über Gleitbuchsen 6 gegen das Gehäuse 2 abstützt, einen an dem Zylinder 5 befestigten Abstandssensor 7, der sich durch die Buchse 3 erstreckt, und eine Arretiereinrichtung 8, mit welcher der Zylinder 5 in axialer Richtung bewegt und in verschiedenen Stellungen arretiert werden kann. Bei dem Abstandssensor 7 handelt es sich vorliegend um einen konfokal-chromatischen Abstandssensor. Alternativ kann aber auch ein akustischer Abstandssensor verwendet werden.

Das Gehäuse 2 ist zur Fixierung der Buchse 3 an seinem ersten freien Ende mit einem Innengewinde 9 versehen. Am zweiten freien Ende des Gehäuses 2 ist ein Befestigungsabschnitt 10 zur Befestigung des Deckels 4 ausgebildet. Im Bereich des Befestigungsabschnitts 10 ist eine Gewindebohrung 11 angeordnet, die sich radial durch die Wandung des Gehäuses 2 erstreckt und zur Aufnahme einer nicht näher dargestellten Madenschraube dient. Ferner ist das Gehäuse 2 mit einer Y-förmigen Durchbrechung 12 versehen, die einen Teil der Arretierungseinrichtung 8 bildet.

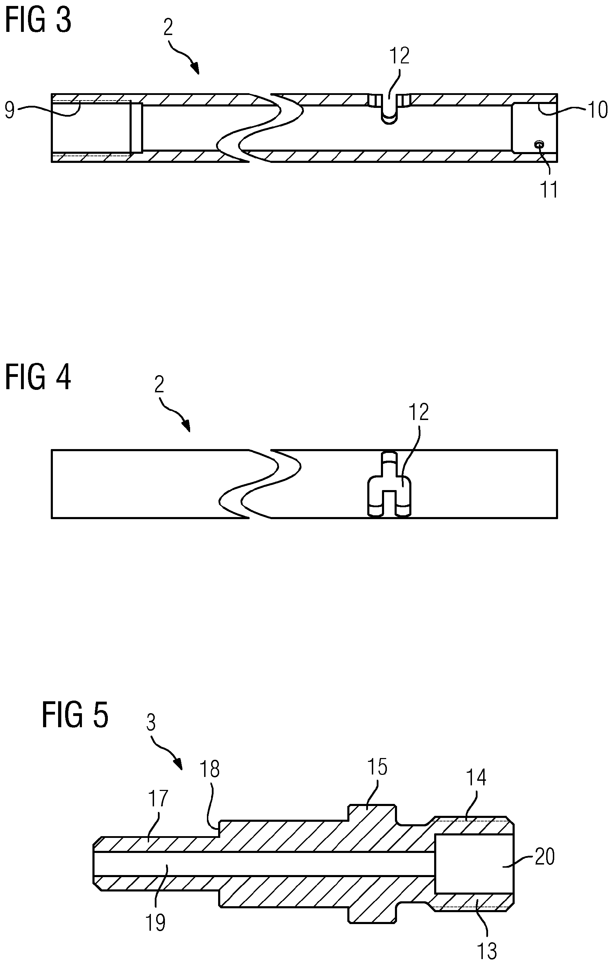

Die Buchse 3 ist unter Bezugnahme auf Figur 5 im Wesentlichen rotationssymmetrisch ausgebildet. An ihrem ersten freien Ende umfasst sie einen Befestigungsabschnitt 13, der mit einem korrespondierend zum Innengewinde 9 des Gehäuses 2 ausgebildeten Außengewinde 14 versehen ist. Im Anschluss an den Befestigungsabschnitt 13 verjüngt sich der Außendurchmesser der Buchse 3 und geht dann in einen radial auswärts vorstehenden und als Anschlag dienenden Vorsprung 15 über. An den Vorsprung 15 schließen sich ein Zwischenabschnitt 16 mit einem ersten Durchmesser und ein Endabschnitt 17 mit einem zweiten Durchmesser an, die durch eine Stufe 18 voneinander getrennt sind, wobei der erste Durchmesser größer als der zweite Durchmesser ist. Durch die Buchse 3 erstreckt sich eine Durchgangsbohrung 19, die zur Aufnahme des freien Endes des Abstandssensors 7 dient. Ferner ist im Bereich des Befestigungsabschnittes 13 ein Federaufnahmeraum 20 in Form einer sich in axialer Richtung erstreckenden Sackbohrung vorgesehen.

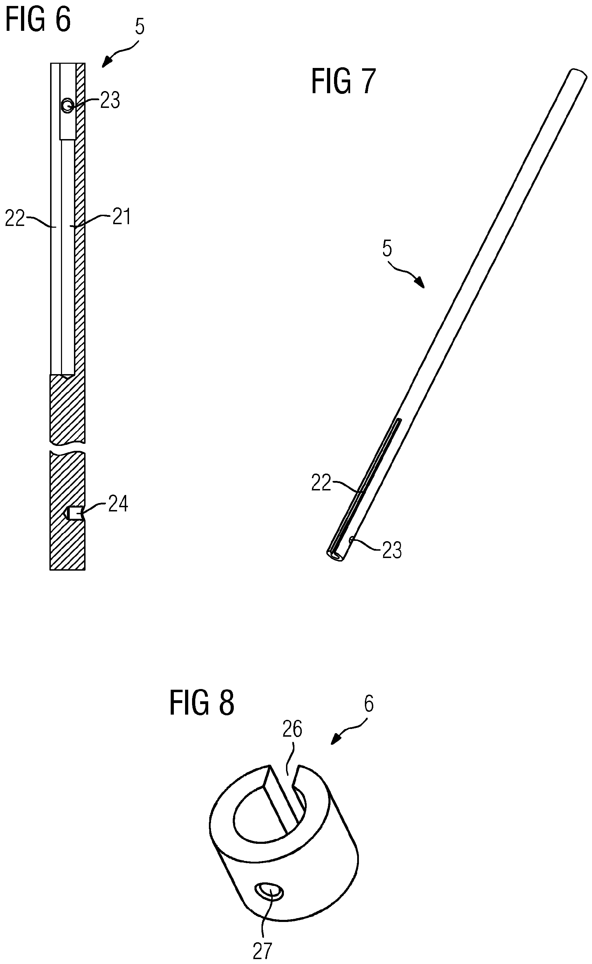

Der Zylinder 5, der im Detail in den Figuren 6 und 7 dargestellt ist, ist aus Vollmaterial hergestellt und an seinem der Buchse 3 zugewandten freien Ende mit einer Sackbohrung 21 versehen, die zur Aufnahme des Abstandssensors 7 dient. Über die Länge der Sackbohrung 21 erstreckt sich in axialer Richtung ein Schlitz 22. Ferner ist im vorderen Bereich der Sackbohrung 21 eine Gewindebohrung 23 ausgebildet, die sich in radialer Richtung erstreckt und zur Aufnahme einer Madenschraube dient. Eine weitere sich radial erstreckende Gewindebohrung 24 ist am anderen freien Ende des Zylinders 5 ausgebildet, die zur Befestigung eines Gewindestiftes 25 dient, der einen Teil der Arretierungseinrichtung 8 bildet.

Die Gleitbuchsen 6 sind im Wesentlichen ringförmig ausgebildet, wobei der jeweilige Innendurchmesser der Gleitbuchsen 6 im Wesentlichen dem Außendurchmesser des Zylinders 5 entspricht. Die Gleitbuchsen 6 sind mit einem sich axial erstreckenden, die Ringform unterbrechenden Schlitz 26 versehen. Ferner ist an jeder Gleitbuchse 6 in radialer Richtung eine Gewindebohrung 27 ausgebildet, die wiederum zur Aufnahme einer Madenschraube dient.

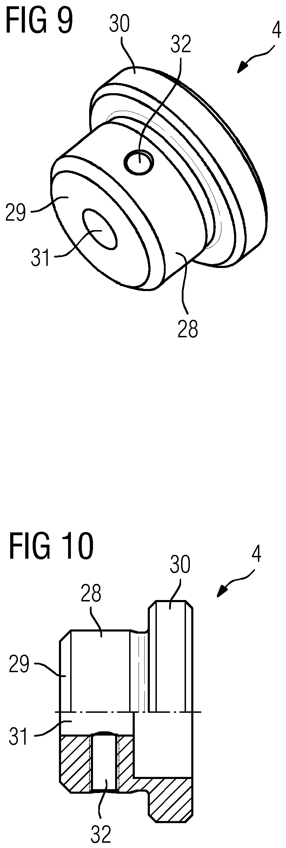

Die Figuren 9 und 10 zeigen den Deckel 4, der ebenfalls im Wesentlichen rotationssymmetrisch ausgebildet ist. Der Deckel 4 umfasst einen korrespondierend zum Befestigungsabschnitt 10 des Gehäuses 2 ausgebildeten und in diesen mittels einer Spielpassung einsetzbaren Befestigungsabschnitt 29 und einen sich an dem Befestigungsabschnitt 29 anschließenden, radial vorstehenden Vorsprung 30. Der Deckel 4 ist mittig mit einer Durchgangsöffnung 31 versehen. Im Bereich des Befestigungsabschnittes 29 ist ferner eine Gewindebohrung 32 ausgebildet, die sich radial bis zur Durchgangsöffnung 31 erstreckt und zur Aufnahme einer Madenschraube dient.

Zur Montage der Abstandsmesseinrichtung 1 werden in einem ersten Schritt die Gleitbuchsen 6 auf den Außendurchmesser des Zylinders 5 aufgeschoben, beabstandet voneinander positioniert und mittels Madenschrauben an dem Zylinder 5 festgelegt. In einem weiteren Schritt wird das eine Verkabelung 33 aufweisende Ende des Abstandssensors 7 in die Sackbohrung 21 des Zylinders 5 geschoben und die Verkabelung 33 durch den Schlitz 22 des Zylinders 5 geführt. Daraufhin werden eine Unterlegscheibe 34 sowie eine Feder 35 auf das freie Ende des Abstandssensors 7 aufgeschoben. In einem weiteren Schritt wird der Zylinder 5 zusammen mit dem Abstandssensor 7, der Unterlegscheibe 34 und der Feder 35 in das Gehäuse 2 eingeschoben, bis die Gewindebohrung 24 des Zylinders 5 mit der Durchbrechung 12 des Gehäuses 2 in Deckung kommt. Daraufhin wird der Gewindestift 25 durch die Durchbrechung 12 des Gehäuses 2 geführt und in die Gewindebohrung 24 des Zylinders 5 geschraubt. In einem weiteren Schritt wird das freie Ende des Abstandssensors 7 in die Durchgangsbohrung 19 der Buchse 3 eingeschoben. Nunmehr wird die Buchse 3 mit dem Gehäuse 2 verschraubt, bis der Vorsprung 15 der Buchse 3 am Gehäuse 2 zur Anlage kommt, wobei die Feder 35 im Federaufnahmeraum 20 der Buchse 3 aufgenommen wird. Während des Schraubvorgangs wird die Feder 35 zwischen der Buchse 3 und der Unterlegscheibe 34 gespannt. In einem weiteren Schritt wird der Befestigungsabschnitt 29 des Deckels 4, durch dessen Durchgangsöffnung 31 die Verkabelung 33 des Abstandssensors 7 geführt und durch eine in die Gewindebohrung 32 eingeführte Madenschraube gesichert ist, mittels einer Spielpassung in den Befestigungsabschnitt 10 des Gehäuses 2 eingesetzt. Daraufhin wird der Deckel 4 an dem Gehäuse 2 gesichert, indem eine Madenschraube durch die Gewindebohrung 11 des Gehäuses 2 eingesetzt wird.

Im montierten Zustand kann der Zylinder mit dem darin gehaltenen Abstandssensor 7 innerhalb des Gehäuses 2 axial verschoben werden, indem der Gewindestift 25 der Arretiereinrichtung 8 manuell betätigt wird. Genauer gesagt kann der Abstandssensor 7 axial zwischen einer Betriebsstellung, in der die Spitze des Abstandssensors 7 aus der Buchse 3 vorsteht, einer zurückgezogenen Stellung, in der die Spitze des Abstandssensors 7 innerhalb der Buchse 3 angeordnet ist, und einer Zwischenstellung bewegt und in diesen Stellungen arretiert werden.

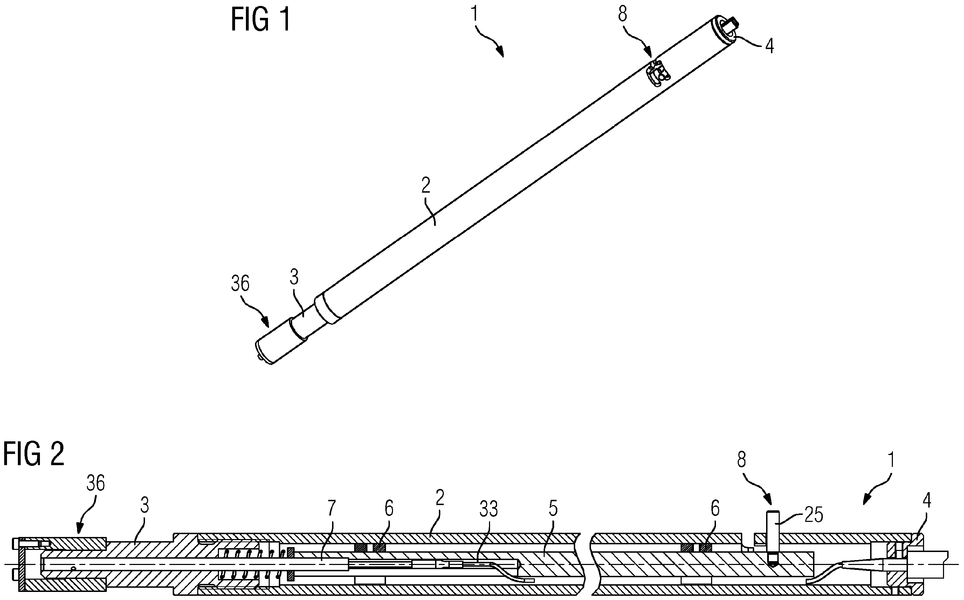

Zur Kalibrierung der Abstandsmesseinrichtung 1 kann auf den Endabschnitt 17 der Buchse 3, wie es in den Figuren 1 und 2 dargestellt ist, eine Kalibriereinrichtung 36 passgenau aufgeschoben werden. Die Kalibriereinrichtung 36 umfasst eine rotationssymmetrische Hülse 37, an der stirnseitig mittels Schrauben 38 eine Abdeckung 39 befestigt ist. Der Innendurchmesser der Hülse 37 ist zweistufig ausgebildet, wobei der Innendurchmesser an demjenigen freien Ende der Hülse 37, an dem die Abdeckung 39 angeordnet ist, geringfügig größer als der Durchmesser am anderen freien Ende ist. Entsprechend muss die Passung nur am freien Ende der Hülse 37 vorgesehen werden.

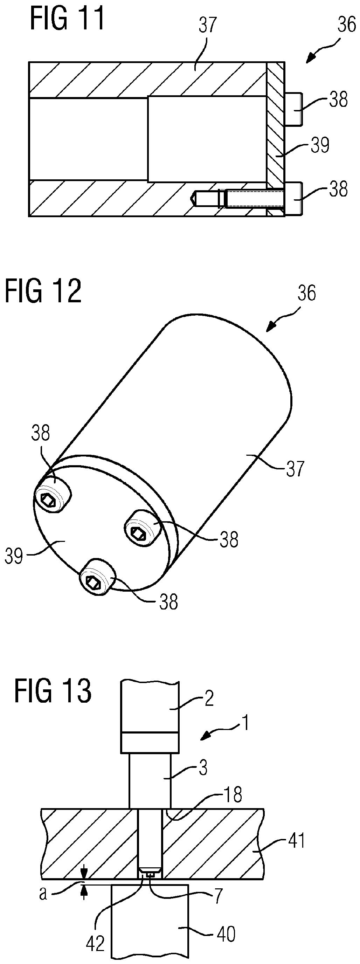

Figur 13 zeigt die Abstandsmesseinrichtung 1 im bestimmungsgemäßen Zustand während der Messung eines Abstands (a) zwischen Schaufelspitzen von an einem Rotor gehaltenen Laufschaufeln 40 und einer die Laufschaufelspitzen ringförmig umgebenden Ummantelung 41, die vorliegend durch Leitschaufelträger gebildet wird. Zur Durchführung einer solchen Messung wird die Buchse 3 der Abstandsmesseinrichtung 1 in eine sich radial durch die Ummantelung 41 erstreckende, von außen zugängliche Durchgangsbohrung 42 eingesetzt, die im Bereich der Laufschaufeln 40 ausgebildet ist, bis die Stufe 18 an der Ummantelung 41 zur Anlage kommt. In einem weiteren Schritt wird der Abstandssensor 7 durch manuelle Betätigung der Arretiereinrichtung 8 in seine Betriebsstellung überführt, so dass die Spitze des Abstandssensors 7 auswärts von der Abstandsmesseinrichtung 1 vorsteht. Die Länge des Endabschnittes 17 der Abstandsmesseinrichtung 1 ist dabei derart gewählt, dass die Abstandsmesseinrichtung 1 einschließlich der von dieser vorstehenden Spitze des Abstandssensors 7 im bestimmungsgemäßen Zustand radial einwärts nicht über die Ummantelung 41 vorsteht, so dass die Spitze des Abstandssensors 7 vor einer Berührung mit den Laufschaufeln 40 geschützt ist. In einem weiteren Schritt wird unter Einsatz des konfokal-chromatischen Abstandssensors 7 bei sich drehendem Rotor der Abstand (a) bestimmt. Vorteilhaft sind verteilt über den Umfang der Ummantelung 41 mehrere Durchgangsbohrungen 42 vorgesehen, so dass die Messung des Abstands (a) an verschiedenen Umfangspositionen wiederholt werden kann, wodurch die Genauigkeit der Erfassung der relativen Lage zwischen den Laufschaufeln 40 und der Ummantelung 41 verbessert wird.

Ein wesentlicher Vorteil der in den Figuren dargestellten Abstandsmesseinrichtung 1 besteht darin, dass diese dank des Einsatzes eines konfokal-chromatischen Abstandssensors 7 sehr genaue Messergebnisse liefert. Ferner arbeitet der Abstandssensor 7 berührungslos und ist vor einer Berührung mit den Laufschaufeln 40 während der Durchführung einer Messung geschützt. Dank der beweglichen Anordnung des Abstandssensors 7 zwischen der Betriebsstellung und der zurückgezogenen Stellung kann der Abstandssensor 7 bei Bedarf jederzeit in die zurückgezogene Stellung überführt werden, um diesen während eines Transports oder auch während des Einsetzens in eine zugeordnete Durchgangsbohrung 42 vor äußeren Beschädigungen zu schützen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Abstandsmesseinrichtung (1) mit einem rohrförmigen Gehäuse (2), einer ein erstes freies Ende des Gehäuses (2) verschließenden Buchse (3) und einem in dem Gehäuse (2) aufgenommenen, berührungslos messenden Abstandssensor (7), der sich durch die Buchse (3) erstreckt und der ein konfokal-chromatischer oder akustischer Abstandssensor ist, **dadurch gekennzeichnet, dass** der Abstandssensor (7) axial zwischen einer Betriebsstellung, in der eine Spitze des Abstandssensors (7) auswärts von der Buchse (3) der Abstandsmesseinrichtung (1) vorsteht, und einer zurückgezogenen Stellung, in der die Spitze des Abstandssensors (7) innerhalb der Buchse (3) der Abstandsmesseinrichtung (1) angeordnet ist, bewegbar in dem Gehäuse (2) aufgenommenen ist, und dass die Abstandsmesseinrichtung (1) eine Arretierungseinrichtung (8) aufweist, die derart ausgebildet ist, dass der Abstandssensor (7) zumindest in seiner Betriebsstellung durch manuelles Betätigen der Arretierungseinrichtung (8) arretierbar ist.

2. Abstandsmesseinrichtung (1) nach Anspruch 1,
**dadurch gekennzeichnet, dass**
zumindest eine Feder (35) vorgesehen ist, die derart angeordnet ist, dass ihre Federkraft einer Bewegung des Abstandssensors (7) aus der zurückgezogenen Stellung in die Betriebsstellung entgegen wirkt.

3. Abstandsmesseinrichtung (1) nach Anspruch 1 oder 2,
**dadurch gekennzeichnet, dass**
der Abstandssensor (7) an einem in dem Gehäuse (2) gleitend bewegbar aufgenommenen Zylinder (5) angeordnet ist.

4. Abstandsmesseinrichtung nach Anspruch 3,
**dadurch gekennzeichnet, dass**
der Abstandssensor (7) stabförmig ausgebildet und in einer am freien Ende des Zylinders (5) vorgesehenen axialen Sackbohrung (21) aufgenommen ist.

5. Verfahren zur Messung eines Abstands (a) zwischen Schaufelspitzen von an einem Rotor gehaltenen Laufschaufeln (40) und einer die Laufschaufelspitzen ringförmig umgebenden Ummantelung (41) bei sich drehendem Rotor, **dadurch gekennzeichnet, dass** der Abstand unter Verwendung zumindest einer berührungslos messenden Abstandsmesseinrichtung (1) nach einem der vorherigen Ansprüche berührungslos gemessen wird.

6. Verfahren nach Anspruch 5,
**dadurch gekennzeichnet, dass**
die Abstandsmesseinrichtung (1) zur Durchführung der Abstandsmessung in eine sich radial durch die Ummantelung (41) erstreckende, von außen zugängliche Durchgangsbohrung (42) eingesetzt wird.

7. Verfahren nach Anspruch 5 oder 6,
**dadurch gekennzeichnet, dass**
die Abstandsmessung an mehreren Umfangspositionen durchgeführt wird, die insbesondere gleichmäßig voneinander beabstandet sind.

8. Verfahren nach Anspruch 6 oder 7,
**dadurch gekennzeichnet, dass**
die Abstandsmesseinrichtung (1) und die Durchgangsbohrung(en) (42) derart ausgebildet sind, dass sichergestellt ist, dass die Ummantelung (41) im bestimmungsgemäßen Zustand gegenüber der in einer Durchgangsbohrung (42) aufgenommenen Abstandsmesseinrichtung (1) radial einwärts vorsteht.

## Claims

1. Distance measuring device (1) having a tubular housing (2), a bushing (3) that closes a first free end of the housing (2), and a distance sensor (7) which is accommodated in the housing (2), extends through the bushing (3), measures in contactless fashion, and is a confocal-chromatic or acoustic distance sensor, **characterized in that** the distance sensor (7) is accommodated in the housing (2) so as to be able to be moved axially between an operating position in which a tip of the distance sensor (7) projects outward from the bushing (3) of the distance measuring device (1), and a retracted position in which the tip of the distance sensor (7) is arranged within the bushing (3) of the distance measuring device (1), and **in that** the distance measuring device (1) has an arresting device (8) which is designed in such a manner that the distance sensor (7) can be arrested at least in its operating position by manual actuation of the arresting device (8).

2. Distance measuring device (1) according to Claim 1, **characterized in that** there is provided at least one spring (35) which is arranged in such a manner that its spring force acts counter to a movement of the distance sensor (7) from the retracted position into the operating position.

3. Distance measuring device (1) according to Claim 1 or 2, **characterized in that** the distance sensor (7) is arranged on a cylinder (5) which is accommodated in the housing (2) in such a way that it can be moved in a sliding manner.

4. Distance measuring device according to Claim 3, **characterized in that** the distance sensor (7) is of rod-shaped design and is accommodated in an axial blind bore (21) provided at the free end of the cylinder (5).

5. Method for measuring a distance (a) between blade tips of rotor blades (40) held on a rotor and a shroud (41) surrounding the rotor blade tips in annular fashion while the rotor is rotating, **characterized in that** the distance is measured in contactless fashion using at least one contactlessly-measuring distance measuring device (1) according to one of the preceding claims.

6. Method according to Claim 5, **characterized in that**, in order to carry out the distance measurement, the distance measuring device (1) is inserted into an externally accessible through-bore (42) that extends radially through the shroud (41).

7. Method according to Claim 5 or 6, **characterized in that** the distance measurement is carried out at multiple circumferential positions which are in particular evenly spaced apart from one another.

8. Method according to Claim 6 or 7, **characterized in that** the distance measuring device (1) and the through-bore(s) (42) are designed in such a way as to ensure that the shroud (41) in the correct state projects radially inwards relative to the distance measuring device (1) received in a through-bore (42).

## Revendications

1. Dispositif (1) de mesure de distance, comprenant un boîtier (2) tubulaire, un manchon (3) fermant une première extrémité libre du boîtier (2) et un capteur (7) de distance reçu dans le boîtier (2) et mesurant sans contact, qui s'étend dans le manchon (3) et qui est un capteur de distance confocal-chromatique ou acoustique, **caractérisé en ce que** le capteur (7) de distance est monté dans le boîtier (2) mobile axialement entre une position de fonctionnement, dans laquelle une pointe du capteur (7) de distance fait saillie à l'extérieur du manchon (3) du dispositif (1) de mesure de distance, et une position escamotée, dans laquelle la pointe du capteur (7) de distance est disposée à l'intérieur du manchon (3) du dispositif (1) de mesure de distance, et **en ce que** le dispositif (1) de mesure de distance a un dispositif (8) d'arrêt, constitué de manière à pouvoir arrêter le capteur (7) de distance, au moins dans sa position de fonctionnement, par actionnement manuel du dispositif (8) d'arrêt.

2. Dispositif (1) de mesure de distance suivant la revendication 1,
**caractérisé en ce qu'**
il est prévu au moins un ressort (35), disposé de manière à ce que sa force de ressort agisse à l'encontre d'un déplacement du capteur (7) de distance de la position escamotée à la position de fonctionnement.

3. Dispositif (1) de mesure de distance suivant la revendication 1 ou 2,
**caractérisé en ce que**
le capteur (7) de distance est monté sur un cylindre (5), reçu avec possibilité de se déplacer en glissant dans le boîtier (2).

4. Dispositif (1) de mesure de distance suivant la revendication 3,
**caractérisé en ce que**
le capteur (7) de distance est constitué sous la forme d'un barreau et est reçu dans un trou (21) borgne axial, prévu à l'extrémité libre du cylindre (5).

5. Procédé de mesure d'une distance (a) entre des pointes d'aubes (40) mobiles, retenues à un rotor, et une enveloppe (41) entourant annulairement les pointes d'aubes mobiles lorsque le rotor tourne, **caractérisé en ce que** l'on mesure sans contact la distance en utilisant au moins un dispositif (1) de mesure de distance mesurant sans contact suivant l'une des revendications précédentes.

6. Procédé suivant la revendication 5,
**caractérisé en ce que**
l'on utilise le dispositif (1) de mesure de distance pour effectuer la mesure de la distance dans un trou (42) traversant, s'étendant radialement dans l'enveloppe (41) et accessible de l'extérieur.

7. Procédé suivant la revendication 5 ou 6,
**caractérisé en ce que**
l'on effectue la mesure de la distance en plusieurs positions de pourtour, qui sont à distance les unes des autres, notamment de manière uniforme.

8. Procédé suivant la revendication 6 ou 7,
**caractérisé en ce que**
le dispositif (1) de mesure de la distance et le ou les trous (42) traversants sont constitués de manière à être sûr que l'enveloppe (41) soit dans l'état conforme aux prescriptions en saillie vers l'intérieur radialement, par rapport au dispositif (1) de mesure de distance reçu dans l'un des trous (42) traversants.
